Europäisches Patentamt

**European Patent Office**

Office européen des brevets

(11) Publication number: **0 028 111**
A1

# EUROPEAN PATENT APPLICATION

(21) Application number: **80303692.0**

(22) Date of filing: **20.10.80**

(51) Int. Cl.³: **G 11 B 7/00**
// G11B7/12, G11B27/36

(30) Priority: **22.10.79 US 86775**

(43) Date of publication of application: **06.05.81**
**Bulletin 81/18**

(84) Designated Contracting States: **AT BE CH DE FR GB IT LI LU NL SE**

(71) Applicant: **DISCOVISION ASSOCIATES, P.O. Box 6600 3300 Hyland Avenue, Costa Mesa, California 92626 (US)**

(72) Inventor: **Wilkinson, Richard L., 2007 West 232nd Street, Torrance California 90501 (US)**

(74) Representative: **Arthur, George Fitzgerald et al, KILBURN & STRODE 30, John Street, London WC1N 2DD (GB)**

(54) **Apparatus and method for optically recording an information signal with reduced second harmonic distortion and a record so made.**

(57) Apparatus for recording an information signal (25) on a recording medium such as a rotatable optical recording disc (11), operates such that the signal can subsequently be recovered from the disc with little second harmonic distortion. An intensity-modulated write beam of light (13) is focused onto the rotating disc to produce a sequence of spaced, non-reflective indicia, representative of the information signal, and a read beam of light (61) is focused onto the disc at a trailing location to produce a reflected read beam (69) that is modulated in intensity in accordance with the recorded pattern of non-reflective indicia. The duty cycle of the reflected read beam is monitored (71,83) and a corresponding dc bias signal (85) is utilised to controllably adjust either the peak intensity (at 15) or the modulation (at 53') of the write beam.

ACTORUM AG

.1.

## APPARATUS AND METHOD FOR OPTICALLY RECORDING AN INFORMATION SIGNAL WITH REDUCED SECOND HARMONIC DISTORTION AND A RECORD SO MADE

This invention relates generally to systems for recording an information signal on an optical record medium, and, one object is to enable a signal to be recorded in such a manner that it can be subsequently recovered with reduced second harmonic distortion.

Systems of this type are of particular use in recording signals such as frequency modulated video carrier signals on a recording medium such as an optically-readable disc. Typically, a write beam of light is modulated in intensity in accordance with a signal to be recorded, and the modulated beam is then focused onto the disc as the disc is rotated at a prescribed angular velocity. The intensity of the beam is alternately greater than and less than a predetermined threshold at which an optical characteristic such as reflectivity of the disc is affected, so a sequence of spaced, non-reflective indicia, arranged in a spiral or concentric circle pattern is formed on the disc. The recorded signal can be recovered by playback apparatus in which a read beam of light is directed onto the disc as the disc is rotated at a prescribed angular velocity, such that the beam is reflected in accordance with the recorded pattern of spaced, non-reflective indicia. The reflected beam is then detected in a suitable photocell.

In one system, a portion of the write beam of light, which has been modulated in intensity by a Pockels cell and related Glan prism, is monitored by a special circuit for measuring duty cycle. The circuit produces a corresponding pair of dc bias signals for coupling to the Pockels cell, to controllably adjust the duty cycle of its modulation.

Although the control system described above is effective in many situations, it has not proven completely satisfactory in ensuring that the signal is actually recorded on the record medium with a proper duty cycle. This is because variations in the peak intensity of the write beam of light, along with irregularities in certain characteristics of the recording medium, neither of which is controlled by the special duty cycle measuring circuit, can adversely affect the duty cycle of the signal actually recorded on the disc.

The video input will often be constituted by a frequency modulated carrier signal, and one cycle of the carrier signal will correspond to the period at which the modulated write beam has an intensity greater than the predetermined threshold together with the next period at which it has an intensity less than the predetermined threshold. It has been discovered that there will be a minimum of second harmonic distortion during replay, if the modulated write beam has a 50% duty cycle, that is to say if the average duration of the periods in each cycle at which the intensity of the modulated write beam is greater than the threshold at which the optical characteristic of the medium is modified, is on average equal to half the length of a carrier frequency cycle.

One approach to the problem of minimising second harmonic distortion is a system in which a carrier signal recovered from a data carrier (i.e. an optical recording medium) is passed through a differential amplifier, where it is compared to a prescribed threshold. The threshold is controllably adjusted such that the signal output by the differential amplifier has a duty cycle of substantially 50%, thereby minimising second harmonic distortion. Although this system is generally effective in removing second harmonic distortion from the recovered carrier signals,it is nevertheless desirable to have the duty cycle of the signal actually recorded on the disc as close to 50% as possible, thereby reducing the amount of correction that must be effected to the recovered signal and possibly even obviating the need for any such correction at all.

It will thus be appreciated from the foregoing that there is a definite need for a system for recording a signal on a recording medium, in which the duty cycle of the recorded signal is controllably adjusted such that the signal can be subsequently recovered from the medium with reduced second harmonic distortion. The present invention fulfills this need.

According to the present invention, apparauts for recording an information signal, such as a modulated carrier signal, on a movable optical recording medium, comprises means (17,19 ) for modulating the intensity of a write beam of light (13) in accordance with the information signal to be recorded to have an intensity alternately greater than and less than a predetermined threshold at which an optical characteristic of the medium is modified; means (21) for focusing the modulated write beam onto the recording medium as the medium is moved with respect thereto, whereby a sequence of spaced indicia, representative of the information signal, will be formed in the medium; said means for focusing being arranged also to focus a read beam of light (61) onto the recording medium at a location trailing the write beam, to interact with the medium to produce a modulated read beam (69) having an intensity modulated by the recorded sequence of spaced indicia; a monitor (83) of the modulated read beam for producing a control signal (85) dependent on the duty cycle of the modulated read beam, and arranged to adjust the duty cycle of the modulated write beam.

The ratio of the mean duration of the period at which the intensity of the modulated write beam is greater than the predetermined threshold to the mean duration of that period together with the next period at which the intensity is less than the predetermined threshold is called in this specification the 'duty cycle' of the modulated write beam.

The modulated read beam will have periods of one intensity corresponding to the lengths of the spaced indicia, alternating with periods of another intensity corresponding to the lengths of the spaces between the indicia. The ratio of the mean duration of a period at the one intensity to the mean duration of the period together with the next period at the other intensity is called in the specification the 'duty cycle' of the modulated read beam.

Preferably the recording apparatus includes second harmonic detector means for monitoring the intensity signal and producing a bias control signal, indicative of the duty cycle of the intensity signal. The bias control signal can be coupled to the writing means to controllably adjust the write beam modulator and thereby appropriately configure the resultant sequence of spaced indicia, such that the information signal can be subsequently recovered by playback apparatus, with reduced second harmonic distortion.

Alternately, the bias control signal can be coupled to the write laser to controllably adjust its power level, accordingly. As a result, the peak intensity of the modulated write beam is regulated such that the resultant pattern of spaced indicia likewise has a duty cycle corresponding to that of the original information signal.

An embodiment in which the peak intensity of the write beam is not regulated by the bias control signal, the recording of a 50% duty cycle signal will sometimes be effected by a write beam having a duty cycle other than 50%.

The invention includes a method of recording an information signal on a movable optical recording medium (11) in which the intensity of a write beam of light (13) is modulated in accordance with the information signal to have an intensity alternately greater than and less than a predetermined threshold at which an optical characteristic of the medium is modified, the modulated write beam is focused onto the recording medium, and the medium is moved with respect to it to form on the medium a sequence of spaced indicia representative of the periods when the write beam intensity is greater than the threshold; a read beam of light (61) is focused onto the recording medium at a location trailing the write beam to produce a modulated read beam (69); the read beam is monitored to produce a control signal (85) dependent on its duty cycle; and the control signal is used to adjust the duty cycle of the modulated write beam.

The invention may be carried into practice in various ways, and two embodiments will now be described with reference to the accompanying drawings in which:

FIGURE 1 is a simplified block diagram of apparatus in accordance with one embodiment of the present invention, for recording a video signal on an optical recording disc;

FIGURE 2 is a block diagram of recording apparatus in accordance with a second embodiment of the present invention;

FIGURE 3 is a simplified block diagram of the second harmonic detector utilised in the embodiments of both FIGURES 1 and 2: and

FIGURE 4 is an exemplary timing diagram depicting a set of waveforms present in the second harmonic detector of FIGURE 3.

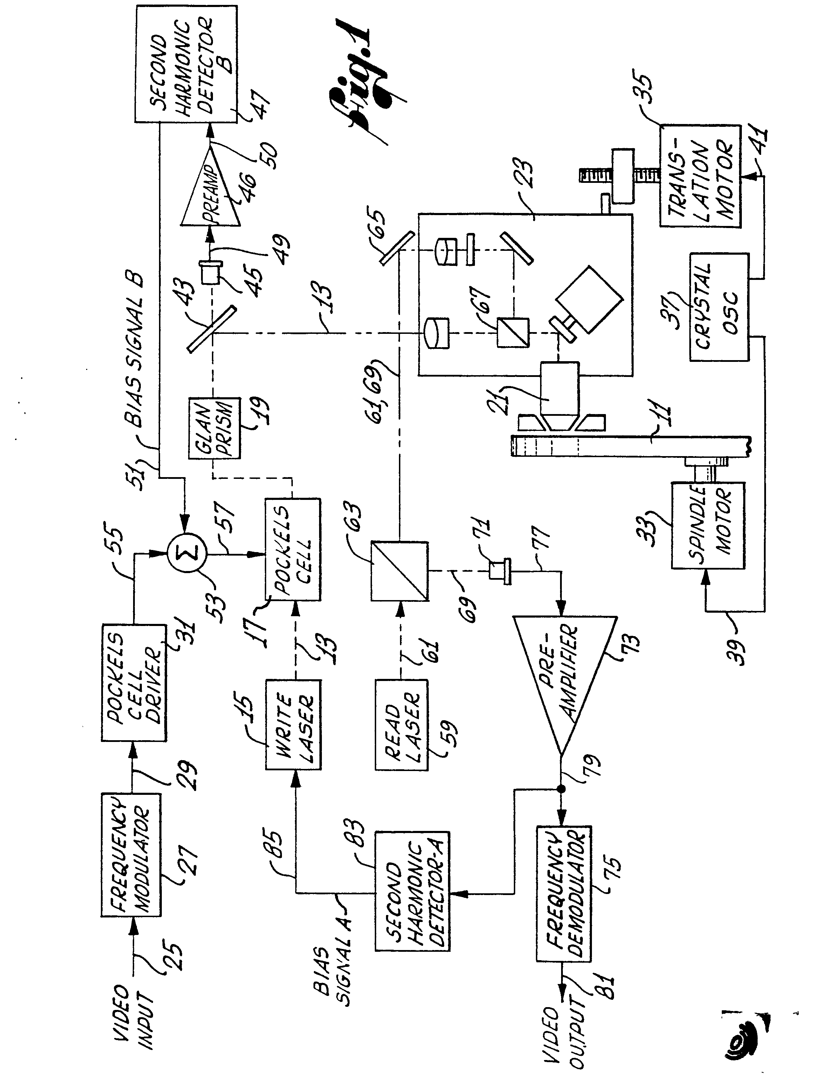

Referring now to the drawings and particularly to FIGURE 1, there is shown apparatus for recording a video signal on a rotatable optical recording disc 11. The apparatus operates to focus an intensity-modulated write beam of light 13 onto the disc, as the disc is rotated at a prescribed angular velocity. The intensity of the modulated write beam is alternately greater than and less than a predetermined threshold at which the reflectivity of the disc is modified, whereby a sequence of spaced, substantially non-reflective indicia, representative of the modulated video signal, is formed in the disc.

The write beam 13 is produced by a write laser 15 and is modulated in intensity by a Pockels cell 17 and an associated Glan prism 19. The modulated beam is then focused onto the rotating disc 11 by an objective lens 21, which is mounted on a radially movable carriage 23.

The video signal to be recorded on the disc is supplied on line 25 to a frequency modulator 27 for conventional frequency modulation, and in turn over line 29 to a Pockels cell driver 31, which appropriately conditions the modulated signal for coupling to the Pockels cell 17. The frequency modulated signal has a nominal duty cycle of 50%.

The optical recording disc 11 is rotated at a substantially constant angular velocity by a spindle motor 33, and the radially movable lens carriage 23 is moved, simultaneously, in a radial direction at a prescribed constant velocity by a translation motor 35, whereby the intensity-modulated write beam 13 traces a succession of substantially circular recording tracks that form a spiral pattern on the disc. The relative speeds of both the spindle motor and the translation motor are synchronized by a crystal oscillator 37, which produces control signals for coupling over lines 39 and 41 to the two motors, respectively.

The duty cycle of the intensity-modulated write beam of light 13 is controllably adjusted to be substantially the same as that of the frequency modulated video signal, i.e., 50%, using a special beamsplitting mirror 43, a photocell 45, a preamplifier 46, and a second harmonic detector B 47. The mirror is disposed in the path of the modulated beam and is adapted to transmit a small portion of the beam to the photocell, which produces a corresponding electrical signal. The electrical signal is transmitted over line 49 from the photocell to the preamplifier, and in turn over line 50 to the detector B, which monitors the duty cycle of the signal and produces a corresponding dc bias signal B for coupling to the Pockels cell 17. Specifically, the bias signal is coupled over line 51 to a summer 53 where it is summed with the frequency modulated carrier signal supplied on line 55 from the Pockels cell driver 31. The sum of the two signals is then coupled over line 57 from the summer to the Pockels cell 17, to controllably adjust the cell accordingly, whereby the duty cycle of the modulated beam is regulated to be substantially 50%.

The recording apparatus of FIG. 1 further includes a read laser 59 for producing a read beam of light 61 that is focused by the objective lens 21 onto the disc 11 at a location trailing that of the intensity-modulated write beam 13 by a relatively small amount, preferably about 10 microns. The read beam has a substantially constant intensity, substantially less than the predetermined threshold at which the reflectivity of the disc is affected. The read beam is transmitted through a first beam splitter 63 and, in turn, a fixed mirror 65, to the lens carriage 23, where it is combined with the intensity-modulated write beam in a second beam splitter 67.

The read beam 61 is reflected by the rotating disc 11 in accordance with the recorded pattern of

.10.

spaced, non-reflective indicia, to yield an intensity-modulated reflected beam 69 that is collected by the objective lens 21 and directed back along the same path as the unmodulated read beam until it reaches the first beam splitter 63, where it is redirected at a read-after-write photocell 71. The recording apparatus further includes a preamplifier 73 and a frequency demodulator 75, and the electrical signal produced by the read-after-write photocell, corresponding to the modulated intensity of the reflected read beam, is transmitted over line 77 to the preamplifier for amplification, and, in turn, over line 79 to the frequency demodulator for demodulation. The resultant baseband video signal is output on line 81, for coupling to a suitable video monitor (not shown).

In accordance with the invention, the recording apparatus further includes a second harmonic detector A 83 for monitoring the signal output by the preamplifier 73 and for producing a d.c. bias signal A representative of the duty cycle of the signal. This bias signal is therefore indicative of the second harmonic distortion in the preamplifier output signal and, accordingly, in the actual pattern of spaced, non-reflective indicia in the disc 11. The bias signal A is coupled over line 85 to the write laser 15 to controllably adjust the power level of the write beam 13, such that the recorded pattern has a duty cycle of substantially 50% and second harmonic distortion is minimized.

This continuous regulation of the intensity of the write beam 13 insures that even though there are variations in the velocity of the disc 11 relative to the write beam, and even though there might be slight variations in the duty cycle of the modulated write

.11.

beam or localized variations in the sensitivity of the disc to the write beam, the pattern of spaced, non-reflective indicia actually recorded on the disc will always have a duty cycle of substantially 50%. As a result, the signal can be recovered from replicas of the disc by playback apparatus (not shown) with a minimum of second harmonic distortion.

It will be appreciated that since the tangential velocity of the disc 11 relative to the write beam 13 is substantially directly proportional to the radius of the track being scanned, the peak intensity of the write beam must be correspondingly proportional to the radius, for the duty cycle of the recorded signal to be maintained constant. Thus, the dc bias signal A produced by the second harmonic detector A 83 automatically has the appearance of a ramp function, varying substantially linearly with the radius.

More particularly, as shown in FIG. 3, both the second harmonic detector B 47, used in regulating the duty cycle of the write beam of light 13, and the second harmonic detector A 83, used in regulating the peak intensity of the write beam, include a hard-limiter 87, a pair of low-pass filters 89 and 91, and a differential amplifier 93. The analog input signal connected to each of the two second harmonic detectors A and B is coupled to the limiter to produce a pair of complementary, hard-limited signals, designated by the letters A and B, and each hard-limited signal is then filtered in a separate one of the two low-pass filters. The filtered signals are then compared to each other in the differential amplifier to produce the dc bias control signal, which is substantially directly proportional to any deviation in the duty cycle of the analog input signal from a nominal value of 50%.

.12.

Each low-pass filter 89 or 91 is preferably an RC network having a bandwidth of about 1 KHz, several orders of magnitude less than the average frequency of the frequency modulated video signal being recorded.

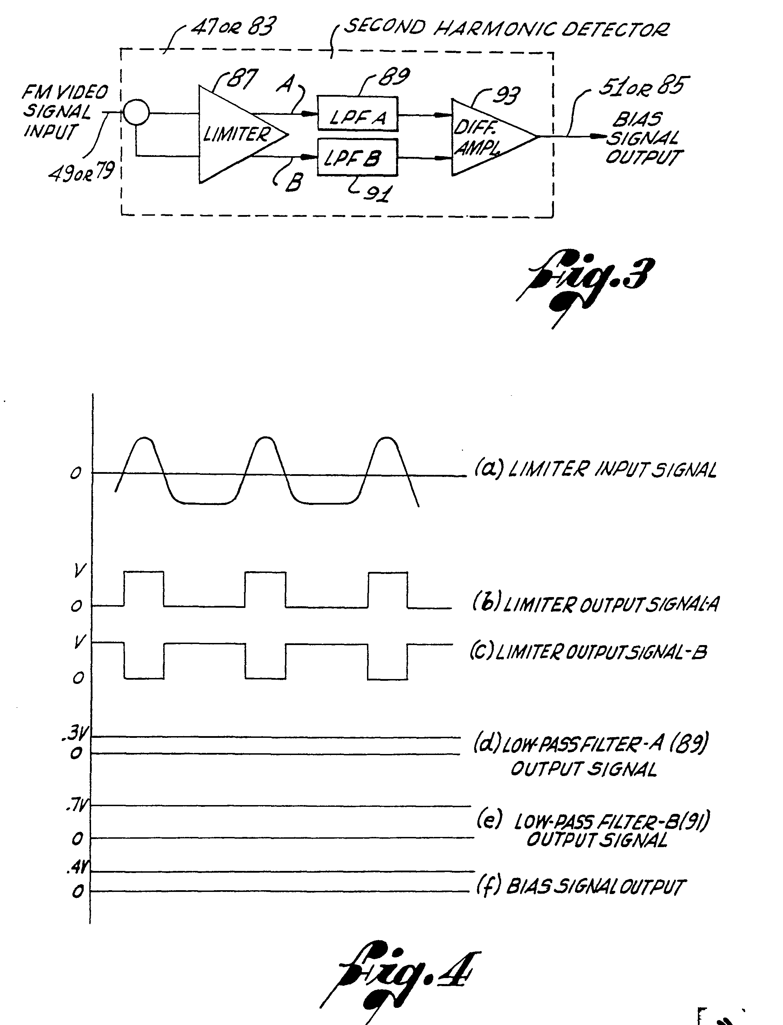

FIG. 4 depicts the waveforms for a few, selected signals in the second harmonic detector circuit 47 or 83 of FIG. 3, for an exemplary input signal (FIG. 4(a)) having a duty cycle of about 30%. The two complementary, hard-limited signals output by the limiter 87 are shown in FIGS. 4(b) and (c), and it can be seen that whenever the analog input signal has a voltage greater than its average value, the limiter output signal A is at a prescribed, positive voltage V, while the limiter output signal B is substantially zero volts, and, conversely, when the analog input signal is less than its average value, the limiter output signal A is at zero volts, while the limiter output signal B is at the prescribed, positive voltage V.

The filtered signals output by the respective low-pass filters 89 and 91 are depicted in FIGS. 4(d) and (e). It will be observed that the output of the filter 89 is a dc level of about .3V, since its input signal (FIG. 4(b) has a duty cycle of about 30%, and that the output of the filter 91 is a dc level of about .7V, since its input signal (FIG. 4(c)) has a duty cycle of about 70%. FIG. 4(f) depicts the resulting dc

.13.

bias control signal produced by the differential amplifier 93 when the two filtered signals (FIGS. 4(d) and (e)) are coupled to its input terminals.

In the case of the second harmonic detector A 83, the bias control signal (FIG. 4(f)) is coupled to the write laser 15 such that the power level of the write beam 13 is controllably adjusted to bring the duty cycle of the reflected read beam 69, and thus the recorded pattern of spaced, non-reflective indicia, back to a nominal value of 50%. Similarly, in the case of the second harmonic detector B 47, the bias control signal is coupled to the Pockels cell 17 such that the duty cycle of the intensity-modulated write beam is controllably adjusted back to a nominal value of 50%. It will be appreciated that when the analog input signal applied to either of the two second harmonic detectors has a duty cycle of 50%, the two complementary, hard-limited signals output by the limiter 87 will likewise have a duty cycle of 50% and the dc bias signal output by the differential amplifier will be substantially zero volts.

In another embodiment of the invention (not shown in the drawings), the write beam 13 is modulated in intensity by an acoustic modulator, as contrasted with the Pockels cell 17 (FIG. 1). This obviates the need for the feedback control system that includes the second harmonic detector B 47, for regulating the duty cycle of the modulated beam, since an acoustic modulator inherently yields a beam modulated with a duty cycle of 50%. As in the embodiment of FIG. 1, however, the duty cycle of the pattern of spaced, non-reflective indicia actually recorded on the disc 11 is controllably adjusted to be substantially 50% using the second harmonic detector A 83, for regulating the power of the write beam.

.14.

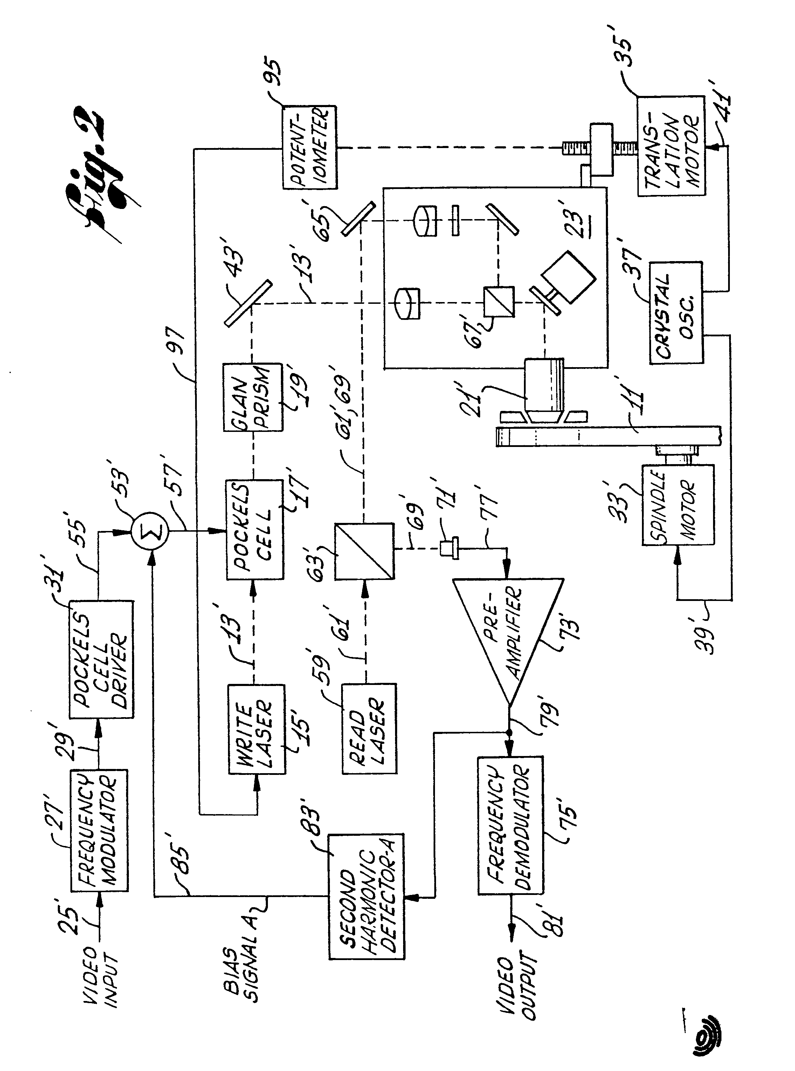

Referring now to FIG. 2, there is shown still another embodiment of recording apparatus in accordance with the present invention. In FIG. 2, elements corresponding to those included in the embodiment of FIG. 1, previously described, are designated by corresponding, primed numerals. In this embodiment, the duty cycle of the intensity-modulated write beam 13', as contrasted with the power level of the beam, is regulated using the dc bias signal A produced by the second harmonic detector A 83', such that the recorded pattern of spaced, non-reflective indicia has a duty cycle of substantially 50%. Any deviation from 50% in the duty cycle of the recorded signal is detected by the second harmonic detector A, which continuously monitors the intensity of the reflected read beam 69', and the resultant bias signal A is proportional to this deviation. This bias signal A is coupled to the Pockels cell 17' through the summer 53', to controllably adjust the duty cycle of the modulated write beam.

The power level of the write beam 13' is controllably adjusted to be approximately directly proportional to the tangential velocity of the recording disc 11' relative to the write beam, whereby the power of the beam per unit area on the disc is maintained substantially constant over the entire disc. This power level adjustment is effected by a potentiometer 95 coupled to the translation motor 35' for moving the lens carriage 23' radially relative to the disc. The potentiometer is appropriately connected to produce a control signal directly proportional to the radius of the recording track being scanned, and this control signal is coupled over line 97 to the write laser 15', to controllably adjust its power level,

0028111

.15.

accordingly. Any deviation from a precise linear relationship between the peak intensity of the write beam and the radius of the track being scanned is compensated for by the second harmonic detector A 83', which automatically adjusts the duty cycle of the beam by an amount corresponding to such deviation.

It will be appreciated from the foregoing that the present invention provides an improved recording apparatus for recording an information signal on a recording medium, wherein the duty cycle of the recorded signal is controllably adjusted to be substantially the same as that of the original information signal. This reduces the amount of correction for second harmonic distortion that must be effected by apparatus for playing back the recorded disc or replicas of the recorded disc.

Although the invention has been described in detail, it will be understood by one or ordinary skill in the art that various modifications can be made, without departing from the spirit and scope of the invention. Accordingly, it is not intended that the invention be limited, except as by the appended claims.

.16.

CLAIMS

1.      Apparatus for recording an information signal on a movable optical recording medium (11) comprising; means (17, 19) for modulating the intensity of a write beam of light (13) in accordance with the information signal to be recorded to have an intensity alternately greater than and less than a predetermined threshold at which an optical characteristic of the medium is modified; means (21) for focusing the modulated write beam onto the recording medium as the medium is moved with respect thereto, whereby a sequence of spaced indicia, representative of the information signal, will be formed in the medium; said means for focusing being arranged also to focus a read beam of light (61) onto the recording medium at a location trailing the write beam, to interact with the medium to produce a modulated read beam (69) having an intensity modulated by the recorded sequence of spaced indicia; a monitor (83) of the modulated read beam for producing  a control signal (85) dependent on the duty cycle of the modulated read beam, and arranged to adjust the duty cycle of the modulated write beam.

2.      Apparatus as defined in Claim 1, wherein the control signal is coupled to adjust the intensity of the unmodulated write beam.

3.      Apparatus as defined in Claim 1, wherein the control signal is coupled to the means for modulating the intensity of the write beam.

4.      Apparatus as claimed in Claim 3 including
a second harmonic detector (47) arranged to monitor
the intensity of the modulated write beam,
and to control the means for modulating the intensity
of the write beam, to tend to control the duty cycle of
the modulated write beam to be 50%.


5.      Apparatus as claimed in any of the preceding
claims in which the monitor (83) comprises a photo-
transducer (71) arranged to produce a signal dependent
upon the intensity of the reflected read beam.

6.      Apparatus as claimed in any of the preceding
claims in which the monitor includes a second harmonic
detector (83).

7.      Apparatus as defined in Claim 6 wherein
the, or each, second harmonic detector includes; means
(87) for hard-limiting the intensity signal to produce
a first limited intensity signal (A) having a first
prescribed  value whenever the intensity is greater
than a prescribed threshold and a second prescribed
value whenever the intensity signal is less than the
prescribed threshold; means (89) for low-pass filtering
the first limited signal to produce a first filtered
signal; and means (93) for  conditioning the first
filtered signal to produce the control signal.

8.      Apparatus as defined in Claim 7 wherein; said means for hard-limiting further produces a second, complementary, limited intensity signal (B) having the second prescribed value whenever the intensity signal is greater than the prescribed threshold and the first prescribed value whenever the intensity signal is less than the prescribed threshold; said low-pass filtering means further operates  (at 91) to low-pass filter the second limited signal to produce a second filtered signal; and said means for conditioning includes differential amplifier means (93) for comparing the first and second filtered signals produced by said means for low-pass filtering and for producing the control signal substantially proportional to the difference between the two filtered signals.

9.      Apparatus as claimed in Claim 7 or Claim 8 in which the prescribed threshold is substantially equal to the average value of the intensity signal.

10.      A method of recording an information signal on a movable optical recording medium (11) in which the intensity of a write beam of light (13) is modulated in accordance with the information signal to have an intensity alternately greater than and less than a predetermined threshold at which an optical characteristic of the medium is modified, the modulated write beam is focused onto the recording medium and the medium is moved with respect to it to form on the medium a sequence of space indicia representative of the periods when the write beam intensity is greater than the threshold; a read beam of light (61) is focused onto the recording medium at a location trailing the write beam to produce a modulated read beam (69); the read beam is monitored to produce a control signal (85) dependent on its duty cycle; and the control signal is used to adjust the duty cycle of the modulated write beam.

11.    A record made on apparatus as claimed in any of Claims 1-9 or by a method as claimed in Claim 10.

Fig.1

Fig. 2

VIDEO INPUT — 25′

27′ FREQUENCY MODULATOR — 29′ — 31′ POCKELS CELL DRIVER — 55′

53′ Σ — 57′

BIAS SIGNAL A — 85′ — 97

WRITE LASER 15′ — 13′ — POCKELS CELL 17′ — GLAN PRISM 19′ — 43′ — 13′

83′ SECOND HARMONIC DETECTOR-A

READ LASER 59′ — 61′ — 63′ — 61′, 69′ — 65′ — POTENTIOMETER 95

69′ — 71′ — 77′ — 67′

VIDEO OUTPUT — 81′ — FREQUENCY DEMODULATOR 75′ — 79′ — PRE-AMPLIFIER 73′ — 21′ — 23′

33′ SPINDLE MOTOR — 11′ — 37′ CRYSTAL OSC. — 35′ TRANS-LATION MOTOR

39′ — 41′

**SECOND HARMONIC DETECTOR**

47 OR 83

FM VIDEO SIGNAL INPUT — 49 OR 79

87 — LIMITER — A / B

89 — LPF A
91 — LPF B

93 — DIFF. AMPL.

51 OR 85 — BIAS SIGNAL OUTPUT

*Fig.3*

(a) LIMITER INPUT SIGNAL

(b) LIMITER OUTPUT SIGNAL-A

(c) LIMITER OUTPUT SIGNAL-B

(d) LOW-PASS FILTER-A (89) OUTPUT SIGNAL

(e) LOW-PASS FILTER-B (91) OUTPUT SIGNAL

(f) BIAS SIGNAL OUTPUT

*Fig.4*

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| X | PATENTS ABSTRACTS OF JAPAN, vol. 2, no. 45, 27th March 1978, page 525E78 <br><br> & JP - A - 53 9101 (MITSUBISHI) 27-01-1978 <br><br> * Whole document * <br><br> -- | 1,3,8 | G 11 B  7/00// <br> G 11 B  7/12 <br> 27/36 |
| | NL - A - 79 01228 (MCA-DISCOVISION, INC.)(01-10-1979) <br><br> * Page 1, line 24 - page 4, line 10; page 5, line 25 - page 6, line 30; page 8, line 32 - page 13, line 22; page 22, line 27 - page 28, line 16; page 33, line 21 - page 36, line 31; page 48, line 31 - page 49, line 11; figures 1, 11-13,23,24 * | 1,2,4, 6-10 | |
| P | & EP - A - 0 005 316 (14-11-1979) <br><br> -- | | **TECHNICAL FIELDS SEARCHED (Int. Cl.)** <br><br> G 11 B 7 <br> G 11 B 27 |
| | NL - A - 79 01227 (MCA-DISCOVISION, INC.)(01-10-1979) <br><br> * Page 1, line 24 - page 4, line 10; page 5, line 25 - page 6, line 30; page 8, line 32 - page 13, line 22; page 22, line 27 - page 28, line 16; page 33, line 21 - page 36, line 31; page 48, line 31 - page 49, line 11; figures 1, 11-13,23,24; claims 1,4-10, 12,17,18,25,26,28 * | 1,2,4, 7-11 | |
| P | & EP - A - 0 005 316 (14-11-1979) <br><br> -- | | |
| | FR - A - 2 399 087 (MCA-DISCOVISION, INC.) | 1,3,5 | |
| | ./. | | |

The present search report has been drawn up for all claims

| Place of search | Date of completion of the search | Examiner |
|---|---|---|
| The Hague | 28-01-1981 | DAALMANS |

EPO Form 1503.1  06.78

BAD ORIGINAL

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | * Page 3, lines 15-30; page 5, line 22 - page 6, line 3; page 8, line 27 - page 10, line 22; page 11, lines 1-4; figures 1-4; claims * | | |
| | & GB - A - 1 462 791 | | |
| | & GB - A - 1 462 792 | | |
| | -- | | |
| | DE - A - 2 521 695 (CANNON K.K.) | 1,4 | |
| | * Page 25, line 8 - page 26, line 10; page 31, line 20 - page 32, line 11; page 33, lines 13-17; page 65, line 4 - page 66, line 6 * | | TECHNICAL FIELDS SEARCHED (Int. Cl. 3) |
| | -- | | |
| P | FR - A - 2 424 603 (HITACHI LTD.) | 1,2,4, 5,7 | |
| | * Page 3, line 9 - page 5, line 3; page 5, line 39 - page 6, line 21; page 7, lines 7-13; figures 2,6; claims 1-3 * | | |
| | & NL - A - 79 03317 | | |
| | & GB - A - 2 025 090 | | |
| | & DE - A - 2 916 758 | | |
| | -- | | |
| A | OPTICS AND LASER TECHNOLOGY, vol. 9, no. 4, August 1977, pages 169-174 Haywards Heath, G.B. P. PALERMO et al.: "Video disc mastering and replication" | 1 | |
| | * Page 171, left-hand column: "Optical recording" - page 173, left-hand column, line 4; figure 4 * | | |
| | -- ./. | | |

EPO Form 1503.2  06.78

European Patent
Office

**EUROPEAN SEARCH REPORT**

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | US - A - 4 162 398 (VICTOR COMPANY OF JAPAN)<br><br>* Column 1, lines 38-68; column 4, lines 48-57; column 2, line 29 - column 3, line 30; figures 1-5 * | 4 | |
| A | US - A - 3 778 791 (LEWICKI et al.)<br><br>* Column 2, lines 41-60; column 7, line 42 - column 8, line 37; figure 3 * | 1,2 | TECHNICAL FIELDS SEARCHED (Int. Cl. 3) |

EPO Form 1503.2   06.78